(19) Europäisches Patentamt
European Patent Office
Office européen des brevets

(11) **EP 2 355 035 A1**

(12) **EUROPEAN PATENT APPLICATION**

(43) Date of publication:
**10.08.2011 Bulletin 2011/32**

(51) Int Cl.:
**G06Q 40/00** (2006.01)

(21) Application number: **10150030.4**

(22) Date of filing: **04.01.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **artnet AG**
**10969 Berlin (DE)**

(72) Inventor: **Neuendorf, Hans**
**10707, Berlin (DE)**

(74) Representative: **Weisse, Renate**
**Patentanwälte Weisse & Wolgast**
**Bleibtreustrasse 38**
**10623 Berlin (DE)**

(54) **Method for automatic development of an art index**

(57)    A method for automatic development of an art index from repeat sales information and single sales information comprising the steps of: exploring and identifying comparables for individual artists, ensuring that said comparables are of acceptable level of homogeneity, especially regarding tests by art analyst and statistical homogeneity, determining sets of said comparables from information about the artist and/or his/her works, wherein said comparable sets are a group of comparable art objects produced by one artist that have similarities in various attributes, such as year of work, medium, genre, size and/or valuation, correcting of price variations, aberrations and/or outliers of valuation judgements within the comparable sets by using auction catalogues and/or other external sources, reports on provenance, exhibition catalogues, news releases and/or scholarly literature concerning the specific artists and objects, reanalyzing said comparable sets by carrying out an inconsistency check visually and/or in medium, size and price and further correcting price variations, and estimating said art index from said comparable sets.

Fig.1

EP 2 355 035 A1

**Description**

**Technical Field**

The invention relates to a method for automatic development of an art index from repeat sales information and single sales information.

Absence of an effective art index is the biggest drawback in analyzing art markets. Although numerous attempts have been made both in academia and in practice to develop a useful art index, none of them are considered reliable nor are they widely used in the art or financial industry to value artworks or analyze price trends. Such a void is the direct result of two major obstacles in analyzing art markets. The first obstacle is the high level of heterogeneity of artworks. The other obstacle is the infrequency of trading. Many available art indices attempt to overcome these limitations in the art market, but very few come close to solving both these issues simultaneously.

**Prior Art**

In general, most of the commercially available indices use three broad methodologies namely, repeat sales, hedonic regression, and price-based approach.

Repeat sales model is extensively used by Mei Moses Fine Art Index, disclosed at http://www.artasanasset.com/main/computation.php.

Mei and Moses (2002) collected art data covering the period 1875-2000 from New York Public Library and Watson Library at the Metropolitan Museum of Art. They solve the inadequate data availability issue by developing their Repeat Sales Index from a large dataset, but still they use incomplete and biased market information or censored data as they only consider records of items that have more than one transaction and most works were sold only once at auction.

Another approach, namely Hedonic Price Index is used amongst others by Chanel, Gerard-Varet and Ginsburgh in 1996 and artprice (www.artprice.com). Single and repeat sales information is used but there are questions regarding how the method accounts for heterogeneity in the art market.

Finally, price-based approaches such as average price is disclosed by ArtInfo's Art Sales Index at http://www.arttactic.com/. A price-to-estimate ratio as equilibrium indicator used by ArtTactics is available in the market.

**Disclosure of the invention**

It is an object of the invention to develop art indices that are efficient and reliable in valuing art and depicting actual price developments on the art auction market. It is a further object of the invention to provide the most advanced and transparent indices and to provide information to make executive decisions.

According to one aspect of the invention this object is achieved by a method with the steps:

(a) exploring and identifying comparables for individual artists;

(b) determining sets of said comparables from information about the artist and/or his/her works, wherein said comparable sets are a group of comparable art objects produced by one artist that have similarities in various attributes, such as year of work, medium, genre, size and/or valuation,

(c) reanalyzing said comparable sets by carrying out an inconsistency check visually and/or in medium, size and price and further correcting price variations,

(d) estimating said art index from said comparable sets.

The underlying approach is to investigate similar art items in terms of a set of criteria including basic genre of object, date range of series or period of the art work, content of the work, materials and techniques used, size and price. Art market specialists group works which share the highest degree of homogeneity.

Preferably the process of creating sets of said comparables further includes the step of ensuring that said comparables are of acceptable level of homogeneity, especially regarding tests by art analyst and statistical homogeneity.

Preferably the steps of grouping works into comparable sets include the correcting of price variations, aberrations and/or outliers of valuation judgements within the comparable sets by using auction catalogues posted and/or other external sources, reports on provenance, exhibition catalogues, news releases and/or scholarly literature concerning the specific artists and objects.

Preferably, the step of estimating said art index from said comparable sets includes the steps of

(d1) considering all the sale prices within a comparable set coming from the same art item and therefore, all the possible combinations of these transactions are considered as repeat sales pairs;

(d2) determining transaction pairs for each artist by creating all possible combinations of items in said comparable sets;

(d3) modifying and preparing said transaction pairs for a model estimation process, determining of a price ratio between the purchase and the sales of each art piece by regression on a set of indicator variables specifying the time of the two transactions and a linear regression model;

(d4) estimating said model by using said transaction pairs, and

(d5) determining an overall art index by taking said estimates.

The purchase is considered as the first transaction and the sale is considered as a second transaction.

It has been found to be advantageous, if the step of determining sets of said comparables from information about the artist and his/her works includes the steps of

(b1) collecting background information of said artists for which said comparables are determined by exploring resources in the form of the internet, art libraries, and experts thereby creating for each artist a set of data regarding his/her origin; human characteristics and socio/economic factors;

(b2) analysing for each artist his/her artist's auction records in a price database and/or cataloguing information; and

(b3) dividing art works are by one or more grouping factors selected from the group of date ranges, medium information, content of the work, style, form, composition, color, motif, quality, materials, techniques, size, value, auction venue, market recognition of artist, provenance, sale date, and supply scarcity of the artists works.

Preferable the steps of determining sets of said comparables includes testing of financial consistency across the items in said comparable sets by comparing one or more information selected from the group of price ranges with pre-sale auction estimates, dates of sale, size of the work, auction venue and nature of the specific sale.

According to a further advantageous modification of the invention comparable sets - based indices may be created for individual artists which are calculated as indicated above using data from comparable set with works by the artist.

A fine art index may be additionally determined based on auction sales records sorted in comparable sets.

Preferably each artist in the index has one or more comparable sets and each comparable set consists of two or more transactions of the same and/or similar art items.

Further modifications of the present invention are subject matter of the subclaims. An embodiment is described below in greater detail with reference to the accompanying drawings.

## Brief description of the drawings

Fig.1     illustrates an art index methodology

Fig.2     illustrates an index system

Fig.3     illustrates a general flowchart for an individual artist index

## Description of an embodiment of the invention

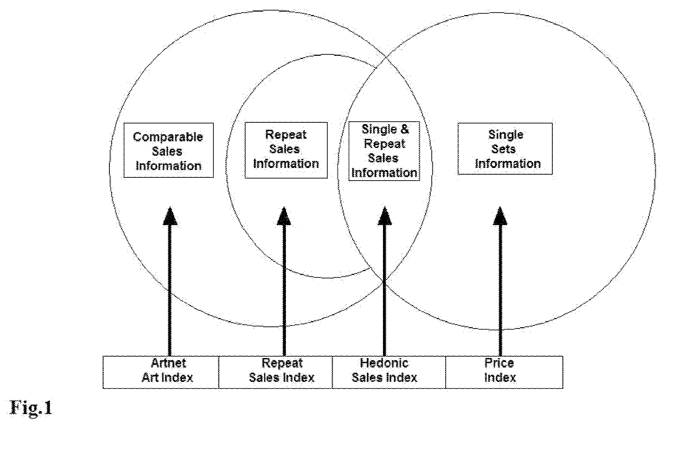

As illustrated in Figure 1, the comparable index according to the invention uses similar sales information, which includes both the repeat sales information and single sales information, but only uses information of items that can be grouped together and termed as comparables. Therefore, it is similar to a repeat sales index as it uses information of items that are homogenously grouped and it is also similar to a hedonic sales index in terms of data as it makes use of single sales information along with the repeat sales information.

Based on the comparables methodology it is possible to generate various art indices which will be accessible for customers in market reports and by subscribing to an interactive market analyst tool. The indices can be used to analyze value of an item, analyze value of an artist, analyze value of the contemporary art market and/or compare art indices with other financial market indices.

At a macro level, the index system according to the present invention consists of three stages of information processes. In the first stage, sales data of artists from a price database such as the "artnet Price Database" run by the applicant are examined and are grouped into comparable sets. This process is performed by experts based on a set of artist level criterion.

In the second stage of analysis, these comparables information is used to estimate the index value of the artists for different index time period. Later, index values of artists can be compiled to create a fine art index representing a group of artists.. In the final stage of the information processes, reports are generated at the comparable set level, individual artist level and at the art market level. This is the stage where the system according to the present invention interacts with the customers and present reports based on their requests.

The indices are developed according to the following method:

**Comparable Identification Stage**

Exploring and identifying comparables for individual artists plays a vital role in the development of the art index. As more data points in comparison to a repeat sales index are included, there are concerns that it will result in presence of heterogeneity in item pairs and thus, bias in the model. Therefore, it is very important to ensure that the comparables used are of an acceptable level of homogeneity both in terms of subjective tests by art analyst and objective test in terms of statistical homogeneity.

In order to determine the comparable sets, background information of the artists may be collected. Particularly, resources are explored online and at art libraries to create a picture of who the artist was, and what were the defining human characteristics and socio/economic factors which may have contributed to why he/she may have worked in such a career pattern.

Second, the artist's auction records in the price database is analyzed by running searches through a comparable set tool program that produces pictures of each lot along with basic cataloguing information.

Third, art works are initially divided by the major grouping factors such as date ranges that define series and periods of similar styles and techniques. The characteristics of the painting examined for comparable set generation are medium information, date range that defines a series, content of the work including style, form, composition, color, motif and quality, materials and techniques of the art work, size, value, auction venue, market recognition of artists, provenance, sale date, and supply scarcity of the artists works.

Finally, the comparable sets are reanalyzed through an internal review process which includes a visual inconsistency check along with an inconsistency check in medium, size and price.

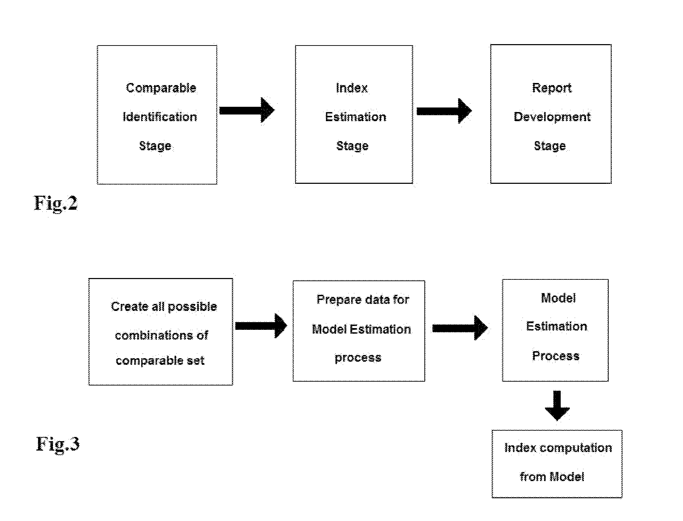

The index estimation stage can be broken into four modules as shown in Figure 3. First, for an artist A, all possible combinations of items in the comparable set are created which becomes the transaction pair for index computation. Second, this data is modified and prepared for the model estimation process. Third, the model is estimated using data created in the second module. Finally, the overall art index is developed taking the estimates from the third module. Details of the analysis are given below:

**Index Methodology**

The comparable sets-based indices are calculated using a Repeat Sales Algorithm as described by Bailey et al. 1963. In this approach, the price ratio between the purchase (first transaction) and the sales (second transaction) of each art piece is regressed on a set of indicator variables specifying the time of the two transactions. Operationally, a linear regression model of the following form is considered:

$$Y = X\beta + U$$

where $Y$ is a $N$-row vector of dependent variables with the Log transformation of sales price to purchase price ratio entered in the rows. Therefore:

$$y_i = \log\left(\frac{Sales\ Price_i}{Purchase\ Price_i}\right)$$

where $t$ is each sales pair. The matrix $X$ consists of independent variables with $N$ rows and $T\text{-1}$ columns where $N$ is the number of sales pairs and $T(t=1...T)$ is the time period of the index. This independent variable matrix is populated with -1, indicating the occurrence of a purchase (first transaction) in that index period, +1, indicating the occurrence of a sale (second transaction) in that index period, and 0, if no activity is recorded in that index period. The following sample of art works of the Russian artist Serge Poliakoff (Table 1a) is described by way of example. The information can be rearranged in the form shown in Table 1b and becomes the input to the algorithm.

Table 1a: Sample of Serge Poliakoff

| Comparable Set Id | Item Id | date | year | Title of Lot Artwork | Year of Work From | Medium | | Sales Price in USD |
|---|---|---|---|---|---|---|---|---|
| 1 | 46 | 6/23/1996 | 1996 | Composition | 1968 | Oil Canvas | on | $67,308.00 |
| 1 | 46 | 12/13/1997 | 1997 | Composition | 1968 | Oil Canvas | on | $49,964.00 |
| 1 | 46 | 9/18/1999 | 1999 | Composition | 1968 | Oil Canvas | on | $94,523.80 |
| 1 | 47 | 12/13/1997 | 1997 | Composition noir, blanc et jaune | 1968 | Oil Canvas | on | $46,263.00 |
| 1 | 47 | 10/10/1998 | 1998 | Composition noir, blanc et jaune | 1968 | Oil Canvas | on | $58,883.80 |

Table 1b: Repeat sales pairs sample of Serge Poliakoff

| Item Id | Purchase Year | Sales Year | Title of Lot Artwork | Purchase Price in USD | Sales Price in USD |
|---|---|---|---|---|---|
| 46 | 1996 | 1997 | Composition | $67,308.00 | $49,964.00 |
| 46 | 1997 | 1999 | Composition | $49,964.00 | $94,523.80 |
| 47 | 1997 | 1998 | Composition noir, blanc et jaune | $46,263.00 | $58,883.80 |

For this sample:

$$Y = \begin{bmatrix} -0.2979 \\ 0.6375 \\ 0.2412 \end{bmatrix},$$

$$X = \begin{bmatrix} -1 & 1 & 0 & 0 \\ 0 & -1 & 0 & 1 \\ 0 & -1 & 1 & 0 \end{bmatrix}$$

where the columns are the indicators for t= 1996, 1997, 1998 and 1999 index periods, respectively.

After estimating the coefficients for each of the index periods, their exponential transformation of the coefficients are considered as the index value for the respective periods. A value of 0 is assigned to the base index period (first time period $t_1$) before performing the transformation. A multiplier of 100 is used to start the index at 100. Therefore, for each index period $t$, the index value ($Index_t$) is computed as

$$Index_t = e^{\hat{\beta}_t} \times 100$$

## Comparable Set-based Index

The art index is based on auction sales records sorted in comparable sets. Comparable sets are a group of comparable art objects produced by one artist that have similarities in various attributes, such as year of work (range), medium (paintings, sculpture etc.) genre (landscape, portrait, still life), size (shape, area) and valuation. Each artist in the index has one or more comparable sets and each comparable set consists of two or more transactions of the same and/or similar art items. At a fundamental level, all the sale prices within a comparable set are considered coming from the same art item and therefore, all the possible combinations of these transactions are considered as repeat sales pairs. Operationally, sale prices for each item within a comparable set are first ordered chronologically, and second, all possible pair combinations are computed.

For example, the data shown in Table 1a are considered. Here Item# 46 consists of three sales transactions (in 1996, 1997 and 1999) and Item# 47 has two sales transactions (1997 and 1998). In a traditional repeat sales model, only repeat sales of the identical item are considered i.e. (item46[1996],item46[1997]), (item46[1997],item46[1999]), and (item47[1997], item47[1998]). In the comparable set-based approach, since item# 46 and item# 47 belong to the same comparable set, they are considered comparables and thus all chronologically possible combinations without transactions belonging to the same index period are considered. Therefore, along with the above pairs, the following are included in the analysis: (item46[1996], item46[1999]), (item46[1996], item47[1997]), (item46[1996], item47[1998]), (item46[1997], item47[1998]), (item47[1997], item46[1999]), (item47[1998], item46[1999]).

While the above embodiment has been described above in great detail with reference to very precise values it is understood that various modifications and variations of this embodiment become apparent to the person skilled in the art without departing from the general idea of the present invention. The description of the invention is, therefore, by no means meant to be limiting of the scope of the invention which is determined by the attached claims.

## Claims

1. Method for automatic development of an art index from repeat sales information and single sales information comprising the steps of:

    (a) exploring and identifying comparables for individual artists,
    (b) determining sets of said comparables from information about the artist and/or his/her works, wherein said comparable sets are a group of comparable art objects produced by one artist that have similarities in various attributes, such as year of work, medium, genre, size and/or valuation,
    (c) reanalyzing said comparable sets by carrying out an inconsistency check visually and/or in medium, size and price and further correcting price variations,
    (d) estimating said art index from said comparable sets.

2. Method according to claim 1, further comprising the step of ensuring that said comparables are of acceptable level of homogeneity, especially regarding tests by art analyst and statistical homogeneity.

3. Method according to claim 1, further comprising the step of correcting of price variations, aberrations and/or outliers of valuation judgements within the comparable sets by using auction catalogues posted and/or other external sources, reports on provenance, exhibition catalogues, news releases and/or scholarly literature concerning the specific artists and objects.

4. Method according to claim 1, wherein the step of estimating said art index from said comparable set includes the steps of
    (d1) Considering all the sale prices within a comparable set coming from the same art item and therefore, all the possible combinations of these transactions are considered as repeat sales pairs;
    (d2) determining transaction pairs for each artist by creating all possible combinations of items in said comparable sets;
    (d3) modifying and preparing said transaction pairs for a model estimation process, determining of a price ratio between the purchase (first transaction) and the sales (second transaction) of each art piece by regression on a set of indicator variables specifying the time of the two transactions and a linear regression model;
    (d4) estimating said model by using said transaction pairs, and
    (d5) determining an overall art index by taking said estimates.

5. Method according to claim 1 or 2, wherein the step of determining sets of said comparables from information about the artist and his/her works includes the steps of
    (b1) collecting background information of said artists for which said comparables are determined by exploring resources in the form of the internet, art libraries, and experts thereby creating for each artist a set of data regarding his/her origin; human characteristics and socio/economic factors;

(b2) analysing for each artist his/her artist's auction records in a price database and/or cataloguing information; and

(b3) dividing art works are by one or more grouping factors selected from the group of date ranges, medium information, content of the work, style, form, composition, color, motif, quality, materials, techniques, size, value, auction venue, market recognition of artist, provenance, sale date, and supply scarcity of the artists works.

6. Method according to claim 5, wherein the step of determining sets of said comparables from information about the artist and his/her works further includes the step of testing financial consistency across the items in said comparable sets by comparing one or more information selected from the group of price ranges with pre-sale auction estimates, dates of sale, size of the work, auction venue and nature of the specific sale.

7. Method according to any of the preceding claims, wherein a fine art index is additionally determined based on auction sales records sorted in comparable sets.

8. Method according to any of the preceding claims, wherein each artist in the index has one or more comparable sets and each comparable set consists of two or more transactions of the same and/or similar art items.

Fig.1

Fig.2

| | | |
|---|---|---|
| Comparable Identification Stage | Index Estimation Stage | Report Development Stage |

Fig.3

| | | |
|---|---|---|
| Create all possible combinations of comparable set | Prepare data for Model Estimation process | Model Estimation Process |

Index computation from Model

Europäisches
Patentamt

European
Patent Office

Office européen
des brevets

# DECLARATION

**Application Number**

which under Rule 63 of the European Patent Convention EP 10 15 0030
shall be considered, for the purposes of subsequent
proceedings, as the European search report

| The Search Division considers that the present application, does not comply with the provisions of the EPC to such an extent that it is not possible to carry out a meaningful search into the state of the art on the basis of all claims | **CLASSIFICATION OF THE APPLICATION (IPC)** |
|---|---|
| Reason: | INV.<br>G06Q40/00 |
| The claims relate to subject matter excluded from patentability under Art. 52(2) and (3) EPC. Given that the claims are formulated in terms of such subject matter, the search examiner could not establish any technical problem which might potentially have required an inventive step to overcome. Hence it was not possible to carry out a meaningful search into the state of the art (Rule 45 EPC). See also Guidelines Part B Chapter VIII, 1-3. The applicant's attention is drawn to the fact that a search may be carried out during examination following a declaration of no search under Rule 63 EPC, should the problems which led to the declaration being issued be overcome (see EPC Guideline C-VI, 8.2). | |

| Place of search | Date | Examiner |
|---|---|---|
| Munich | 17 February 2010 | Dedek, Frédéric |

EPO FORM 1504 (P04F37)